# EUROPÄISCHE PATENTANMELDUNG

(11) **EP 2 711 095 A1**
(43) Veröffentlichungstag der Anmeldung: **26.03.2014**
(21) Anmeldenummer: 13185782.3
(22) Anmeldetag: 24.09.2013
(51) Int. Cl.: B08B 1/04, F24J 2/46, A46B 13/02, F16C 13/02, B08B 1/00

(54) **Reinigungssystem**

(30) Priorität: 24.09.2012 DE 102012217153
(71) Anmelder: Jäger, Anton, 89250 Senden (DE)
(72) Erfinder: Jäger, Anton, 89250 Senden (DE)
(74) Vertreter: Manitz, Finsterwald & Partner GbR

(57) **Zusammenfassung**

Die Erfindung betrifft ein System zum Reinigen eines eine im Wesentlichen ebene, insbesondere geneigte Fläche aufweisenden Gegenstands (10), insbesondere einer Solar- und/oder Photovoltaikanlage. Das System umfasst zumindest eine im Betrieb relativ zur Fläche rotierende Reinigungswalze (14), wenigstens eine Stützeinrichtung zum Abstützen der Walze (14) am zu reinigenden Gegenstand (10) und zumindest eine Befestigungseinrichtung (18)zur stirnseitigen lösbaren Befestigung der Stützeinrichtung an der Walze (14). Die Stützeinrichtung umfasst mindestens zwei gegeneinander austauschbare Module (20, 54), die unterschiedlich ausgebildet ist, um die Walze (14) unterschiedlich am Gegenstand (10) abzustützen.

## Beschreibung

Die Erfindung betrifft ein System zum Reinigen eines eine im Wesentlichen ebene, insbesondere geneigte Fläche aufweisenden Gegenstands, insbesondere einer Solar- und/oder Photovoltaikanlage, mit zumindest einer im Betrieb relativ zur Fläche rotierenden Reinigungswalze, wenigstens einer Stützeinrichtung zum Abstützen, insbesondere zum Halten und/oder Führen, der Walze am zu reinigenden Gegenstand, und zumindest einer Befestigungseinrichtung zur stirnseitigen Befestigung der Stützeinrichtung an der Walze.

Es sind Reinigungsvorrichtungen bekannt, welche permanent mit einer zu reinigenden Oberfläche verbunden sind. Hierbei kann beispielsweise ein Rollen umfassender Wagen vorgesehen sein, welcher eine die Oberfläche reinigende Bürstenwalze an einer Kante eines Solarmoduls führt.

Andere bekannte Reinigungsvorrichtungen sind nicht mit dem zu reinigenden Gegenstand verbunden. So werden hierbei Bürstenwalzen beispielsweise über einen Haltegriff von einem Benutzer geführt.

Gerade bei glatten Flächen, beispielsweise Solar- und/oder Photovoltaikanlageflächen, Glasoberflächen, mit Antireflexschichten beschichtete Oberflächen oder Oberflächen, welche teilweise vorgenässt sind, ist ein gleichmäßiges und kontrolliertes Führen der Walze nicht immer möglich. Das Material der Walze hat nämlich einen vergleichsweise geringen Reibungskoeffizienten, sodass die Walze oftmals nur unzureichend an der zu reinigenden Oberflächen haftet. Die Walze kann dadurch während der Reinigung ausbrechen, d.h. zumindest eine Seite der Walze bewegt sich relativ zur eigentlichen Reinigungsrichtung und rutscht gewissermaßen weg, was die Handhabung erschwert und das Reinigungsergebnis beeinträchtigt.

Derartige Reinigungsvorrichtungen, bei denen eine Walze an einem Haltestab geführt wird, werden vor allem für die Reinigung von großen Flächen eingesetzt. Für schräge, längsgestreckte Flächen werden hingegen häufig die eingangs erwähnten Vorrichtungen verwendet, bei denen ein Wagen an einer Kante, beispielsweise eines Solarpanels, geführt wird. Je nach Gegebenheit des zu reinigenden Gegenstands sind somit unterschiedliche Reinigungsvorrichtungen notwendig. Dies führt insbesondere zu hohen Kosten, da die Reinigungsunternehmen unterschiedliche Reinigungsvorrichtungen vorhalten müssen.

Es ist eine Aufgabe der Erfindung, ein Reinigungssystem zu schaffen, welches variabel an einen zu reinigenden Gegenstand anpassbar ist und ein sicheres Abstützen einer Reinigungswalze am zu reinigenden Gegenstand ermöglicht.

Die Lösung dieser Aufgabe erfolgt durch eine Vorrichtung mit den Merkmalen des Anspruchs 1.

Erfindungsgemäß ist eine Befestigungseinrichtung zur stirnseitigen lösbaren Befestigung der Stützeinrichtung an der Walze ausgebildet, wobei die Stützeinrichtung mindestens zwei gegeneinander austauschbare Module umfasst, die unterschiedlich ausgebildet sind, um die Walze unterschiedlich am Gegenstand abzustützen.

Die Befestigungseinrichtung ermöglicht somit eine vorübergehende, d.h. nicht permanente Kopplung, beispielsweise mittels einer Dreh-, Schraub-, Klick- und/oder Rastverbindung, eines austauschbaren Moduls an der Walze. Die Module können somit insbesondere ohne den Einsatz von Werkzeugen schnell gegeneinander ausgetauscht werden. Auf diese Weise können mit demselben Reinigungssystem sowohl große Flächen als auch langgestreckte, insbesondere schräg angeordnete, Flächen gereinigt werden. Durch die Anpassbarkeit ist somit ein einziges Reinigungssystem zum Reinigen verschiedener Gegenstände ausreichend. Dadurch können Kosten gespart werden.

Durch die lösbare Befestigung können die Stützelemente beispielsweise bei einem Verschleiß schnell und einfach ausgetauscht werden, ohne das gesamte Reinigungssystem austauschen zu müssen. Durch die Modulbauweise ist das Reinigungssystem zudem zerlegbar und weist dadurch nur eine geringe Transportgröße auf.

Die Stützelemente sind insbesondere direkt bzw. unmittelbar mit dem Reinigungsorgan, z.B. der Bürstenwalze oder einer Endkappe der Bürstenwalze, gekoppelt. Die Befestigung erfolgt also nicht z.B. an einem Gehäuse oder einer Abdeckung des Reinigungsorgans.

Erfindungsgemäß handelt es sich bei den austauschbaren Modulen um unterschiedlich ausgebildete Bauteile. Die Bauteile unterscheiden sich beispielsweise in der Form und/oder dem verwendeten Material. Auch können die Module eine unterschiedliche Funktion haben.

Unabhängig von der Art des verwendeten Moduls ist dieses dazu ausgebildet, die Walze am Gegenstand abzustützen. Auf diese Weise kann die Walze sicher auf dem zu reinigenden Gegenstand geführt werden. Auch glatte, insbesondere feuchte, Flächen können dadurch gereinigt werden. Somit können Walzen, die z.B. mithilfe einer langen Haltestange bewegt werden, präzise gesteuert bzw. geführt werden, da die Walze aufgrund der Stützeinrichtung nicht ausbricht und keine Schlenker- oder ungleichmäßigen Hin- und Her-Bewegungen durchführt. Die Reinigungswalze rutscht somit während der Reinigung nicht weg. Eine sichere und kraftsparende Handhabung des Reinigungssystems wird auf diese Weise gewährleistet.

Weiterbildungen der Erfindung sind auch den abhängigen Ansprüchen, der Beschreibung sowie den beigefügten Zeichnungen zu entnehmen.

Gemäß einer Ausführungsform ist ein Führungsmodul zum Führen, insbesondere Einhängen, der Walze an einem Randbereich des Gegenstands ausgebildet. Das Reinigungssystem kann auf diese Weise insbesondere an einer Kante abgestützt werden. Das Führungsmodul kann den Randbereich insbesondere umgreifen oder hintergreifen und steht dabei z.B. bezüglich der zu reinigenden Fläche mit einer Komponente senkrecht dazu vor. Bei einer schräg gestellten Fläche kann das Führungsmodul vorzugsweise an einem oberen Randbereich des Gegenstands eingehängt werden. Das Reinigungssystem wird somit durch den Randbereich des Gegenstands geführt und gehalten. Ein Benutzer muss somit während der Reinigung nicht das gesamte Gewicht des Reinigungssystems halten bzw. bewegen.

Es ist auch möglich, an beiden Seiten der Reinigungswalze stirnseitig ein Führungsmodul anzuordnen. Dadurch kann das Reinigungssystem noch sicherer an dem zu reinigenden Gegenstand geführt werden.

Alternativ oder zusätzlich ist ein Haftmodul zum Haften auf der Fläche des Gegenstands ausgebildet. Auch hier ist es möglich, jeweils ein Haftmodul an beiden Seiten der Walze stirnseitig anzuordnen. Dadurch wird ein Ausbrechen auf beiden Seiten der Reinigungswalze unterbunden.

Es ist auch denkbar, an einer Seite der Walze ein Führungsmodul und an der anderen Seite der Walze ein Haftmodul anzuordnen. Auf diese Weise kann die Reinigungswalze auf der einen Seite durch das Führungsmodul am Randbereich des Gegenstands geführt werden, während es auf der anderen Seite aufgrund des Haftmoduls auf der zu reinigenden Fläche haftet und somit auf dieser Seite nicht ausbricht.

Erfindungsgemäß kann das Führungsmodul gegen das Haftmodul und umgekehrt, abhängig von der Gegebenheit des zu reinigenden Gegenstands, ausgetauscht werden. Auch können andere Module vorgesehen sein, welche nicht primär der Führung oder dem Haften dienen. So sind beispielsweise Module möglich, die einer besseren Fluidverteilung oder Fluidzuführung dienen. Alternativ sind Module denkbar, welche ein schonendes Material umfassen, um empfindliche Gegenstände nicht zu beschädigen.

Nach einer weiteren Ausführungsform ist zumindest eines der Module relativ zur Walze drehbar. Die Rotationsgeschwindigkeiten des Moduls und der Walze können hierbei identisch oder unterschiedlich sein. Für die Drehbewegung des Moduls und/oder der Walze kann ein Antrieb vorgesehen sein. Bei dem Antrieb kann es sich beispielsweise um einen Fluidantrieb handeln, der auf dem Schaufel- oder Turbinenradprinzip basiert. Alternativ ist auch ein elektrischer Antrieb denkbar. Ein Antrieb ist jedoch nicht zwingend erforderlich. So kann die Rotationsbewegung auch aufgrund der Reibung der Walze bzw. der Module bei einer Bewegung der Walze in Reinigungsrichtung durch einen Benutzer hervorgerufen werden. Alternativ ist auch denkbar, dass das Modul und/oder die Reinigungswalze nicht in Rotation versetzt, sondern lediglich auf der zu reinigenden Fläche verschoben wird.

Bevorzugt fällt die Drehachse mit der Rotationsachse der Walze zusammen, d.h. das Modul und die Walze drehen sich um dieselbe Achse. Dadurch wird gewährleistet, dass die Walze bei der Reinigung gleichmäßig und permanent auf der zu reinigenden Oberfläche aufliegt.

Nach einer weiteren Ausführungsform umfasst zumindest eines der Module ein Rad, eine Rolle oder eine Kufe. Die Module können drehbar ausgeführt sein, d.h. die Module können auf der zu reinigenden Oberfläche bzw. an einem Randbereich des Gegenstands abrollen. Auch eine statische Ausführung des Moduls ist möglich, sodass das Modul beispielsweise als Schlitten bewegt wird, ohne eine Drehbewegung auszuführen. Als Modul sind auch mehrere Räder, Rollen oder Kufen denkbar. Diese können auch beispielsweise nach Art eines Wagens angeordnet sein. Die Drehachsen können hierbei mit der Rotationsachse der Walze zusammenfallen. Alternativ ist auch denkbar, dass die Drehachse des Moduls, insbesondere des Führungsmoduls, senkrecht zur Rotationsachse der Walze verläuft, sodass das Rad beispielsweise am Randbereich des Gegenstands abrollen kann.

Ein Rad oder eine Rolle des Führungsmoduls kann am Außenumfang spitz zulaufen oder abgerundet sein. Dadurch ist der Außenumfang derart geformt, dass Unregelmäßigkeiten, z.B. aufgrund von Halteklammern, am Randbereich des zu reinigenden Gegenstandes problemlos überfahren werden können. Diese spezielle Formung des Außenumfangs trägt also dem Umstand Rechnung, dass das Rad bzw. die Rolle einerseits den Randbereich ausreichend tief hinterfassen soll, andererseits aber dort befindliche Unregelmäßigkeiten im Wege sind. Das erfindungsgemäße Reinigungssystem wird auf diese Weise nicht blockiert oder aus seiner Bahn gelenkt, insbesondere angehoben oder "ausgehebelt", wenn es auf eine derartige Unregelmäßigkeit trifft.

Gemäß einer weiteren Ausführungsform ist bezüglich der Rotationsachse der Walze die größte radiale Abmessung eines Moduls, insbesondere des Führungsmoduls, größer als der wirksame Radius der Walze. Als wirksamer Radius der Walze ist hierbei der Radius zu verstehen, den die Walze aufweist, wenn sie auf dem zu reinigenden Gegenstand aufliegt. Da die Walze beispielsweise mit Borsten oder einem komprimierbaren Weichmaterial versehen sein kann, verringert sich der Radius der Walze aufgrund des Eigengewichts, wenn die Walze auf dem Gegenstand aufliegt. Der wirksame Radius ist somit kleiner als der eigentliche, d.h. tatsächliche, Radius der Walze, der gegeben ist, wenn die Walze nicht zusammengedrückt wird. Insbesondere ist die radiale Abmessung des Moduls auch größer als der tatsächliche Radius der Walze. Das Modul steht somit radial über die Walze vor. Vorzugsweise ist die radiale Abmessung des Moduls zumindest an einer Stelle mindestens 5 mm, 10 mm, 20 mm oder 30 mm größer als der wirksame Radius der Walze. Die Walze kann somit an einem Randbereich des Gegenstands eingehängt werden. Bei einem Rad oder einer Rolle mit einem einheitlichen Radius ist die radiale Abmessung an jeder Stelle gleich. Dadurch ist auch die radiale Abmessung an jeder Stelle größer als der wirksame Radius der Walze. Alternativ ist auch denkbar, das Modul nur an einer oder an mehreren Stellen mit einer größeren radialen Abmessung als den wirksamen Radius der Walze auszugestalten. Dies ist insbesondere für ein statisches, d.h. nicht rotierendes, Modul denkbar, bei dem zur Führung der Walze lediglich ein verlängerter Vorsprung vorgesehen sein kann, mit dem die Walze am Randbereich des Gegenstands z.B. eingehakt wird.

Nach einer weiteren Ausführungsform ist bezüglich der Rotationsachse der Walze die größte radiale Abmessung eines Moduls, insbesondere eines Haftmoduls, im Wesentlichen gleich dem oder kleiner als der wirksame Radius der Bürstenwalze. Insbesondere ist die radiale Abmessung kleiner als der tatsächliche Radius der Bürstenwalze. Wird nun die Walze am zu reinigenden Gegenstand angeordnet, werden beispielsweise die Borsten bzw. das Weichmaterial aufgrund des Eigengewichts der Walze zusammengedrückt. Der Radius der Walze verringert sich somit, sodass das Modul mit der Oberfläche des Gegenstands in Kontakt gelangt. Die radiale Abmessung des Moduls entspricht dann insbesondere dem wirksamen Radius der Walze.

Gemäß einer weiteren Ausführungsform weist ein Haftmodul einen Kontaktbereich - d.h. einen Bereich, an dem das Haftmodul mit dem Gegenstand in Kontakt steht, also diesen insbesondere berührt, bzw. am Gegenstand aufliegt - mit einem verformbaren und/oder reibungserhöhenden Material auf. Ein verformbares, vorzugsweise elastisches, Material, beispielsweise ein Elastomer, Gummi, Kautschuk, Silikonkautschuk oder ein Material mit vergleichbaren Verformungseigenschaften, also insbesondere ein Material, welches sich stärker verformt als Hartplastik, hat dabei den Vorteil, dass sich die Kontaktfläche des Haftmoduls mit der zu reinigenden Oberfläche vergrößert. Dadurch wird die Haftung verbessert.

Der Reibungskoeffizient des Materials ist insbesondere größer als der Reibungskoeffizient des Walzenabschnitts, der mit dem Gegenstand in Kontakt kommt, z.B. die Borsten der Walze bzw. ein Weichmaterial. Der Reibungskoeffizient ist dabei optimiert für Glas, insbesondere in Kombination mit Wasser. Das Material kann dabei beispielsweise einen Reibungskoeffizienten von mindestens 0,25, vorzugsweise mindestens 0,3, besitzen. Das Haftmodul garantiert auf diese Weise einen sicheren Halt auf einer zu reinigenden Oberfläche, insbesondere auf glatten und/oder feuchten bzw. nassen Oberflächen. Der Kontaktbereich umfasst insbesondere kein Standardplastik, sondern z.B. ein Gummimaterial, insbesondere Moosgummi, und/oder ein Silikonmaterial. Derartige Materialien können insbesondere Feuchtigkeit aufnehmen und mit der Mikrooberfläche des Gegenstands eine Reibverbindung eingehen.

Nach einer weiteren Ausführungsform umfasst der Kontaktbereich des Haftmoduls eine im Wesentlichen vollumfängliche, insbesondere durchgehende, Ummantelung. Das Haftmodul kann dabei radial außen mit z.B. einem Gummimaterial beschichtet sein bzw. vollständig aus einem Gummimaterial bestehen.

Gemäß einer weiteren Ausführungsform umfasst der Kontaktbereich des Haftmoduls Einzelelemente, die in Umfangsrichtung verteilt angeordnet sind. Das Haftmodul ist in diesem Fall somit nicht durchgehend ummantelt. So können beispielsweise nur einige Abschnitte des Haftmoduls ein reibungserhöhendes und/oder verformbares Material aufweisen. Auch ist denkbar, die Einzelelemente als Kufen auszuführen, welche vorzugsweise im Wesentlichen gerade Abschnitte umfassen, um so die Kontaktfläche zu vergrößern.

In einer Weiterbildung sind die Einzelelemente als Saugnäpfe ausgebildet, die insbesondere ringförmig angeordnet sein können. Durch die Saugnäpfe kann ein sicherer Halt des Haftmoduls am zu reinigenden Gegenstand gewährleistet werden. Es ist auch denkbar, die Saugnäpfe beispielsweise an eine Vakuumquelle anzuschließen. Dadurch können die Haftungseigenschaften zusätzlich verbessert werden.

Nach einer weiteren Ausführungsform weist ein Haftmodul eine Kontaktfläche von mindestens 10 mm², vorzugsweise mindestens 15 mm², besonders bevorzugt mindestens 20 mm², auf. Die Kontaktfläche zwischen dem Haftmodul und dem zu reinigenden Gegenstand ist somit vergleichsweise groß, insbesondere im Vergleich zu herkömmlichen Hartplastikrädern, wodurch der Halt der Walze am zu reinigenden Gegenstand verbessert wird.

Gemäß einer weiteren Ausführungsform ist mit der Walze zumindest eine, insbesondere abgerundete und/oder mit Borsten besetzte, Endkappe stirnseitig verbunden. Die Endkappe kann insbesondere lösbar, z.B. mittels einer Rast-, Klick-, Schraub- und/oder Drehverbindung, mit der Walze verbunden sein. Vorzugsweise fallen die Rotationsachsen der Endkappe und der Walze zusammen. Die Endkappe bildet somit in gewisser Weise eine Verlängerung der Walze. An die Endkappe können Walzen mit unterschiedlicher Länge modulartig gekoppelt werden. Vorzugsweise sind an beiden Enden der Walzen Endkappen angeordnet. Die Endkappen bilden insbesondere ein Verbindungsstück zwischen der Walze und der Befestigungseinrichtung.

In einer Weiterbildung bildet die Endkappe einen Bestandteil der Befestigungseinrichtung. Die Stützeinrichtung kann folglich auch mithilfe der Endkappe an der Walze befestigt werden. Alternativ kann die Endkappe auch als separates Bauteil ausgebildet sein, welches lediglich einen Abschluss für die Walze und keinen Bestandteil der Befestigungseinrichtung darstellt.

Nach einer weiteren Ausführungsform umfasst die Befestigungseinrichtung ein Koppelteil, bei dem ein erster Abschnitt, insbesondere ein erster Achsenabschnitt, zur Aufnahme des Moduls ausgebildet ist und ein zweiter Abschnitt, insbesondere ein zweiter Achsenabschnitt, vorzugsweise lösbar, an der Walze oder einer Endkappe angeordnet ist. Zwischen dem ersten Abschnitt und dem zweiten Abschnitt kann eine Erweiterung vorgesehen sein, d.h. ein Abschnitt mit einer größeren radialen Abmessung als zumindest der erste Abschnitt oder vorzugsweise die beiden Abschnitte. Ausgehend von der Erweiterung in der Mitte erstrecken sich somit zu beiden Seiten Achsstummel. Am ersten Abschnitt wird dabei das Modul gelagert, beispielsweise mithilfe eines Wälzlagers. Das Modul kann sich somit um den Achsstummel drehen. Der zweite Abschnitt kann mit der Walze oder einer Endkappe der Walze lösbar gekoppelt werden, beispielsweise mittels einer Rast-, Klick-, Schraub- und/oder Drehverbindung. Ein schneller Austausch des Moduls wird auf diese Weise ermöglicht.

Gemäß einer Weiterbildung umfasst die Befestigungseinrichtung zur Sicherung des Moduls am ersten Abschnitt des Koppelteils ein lösbar am Koppelteil angeordnetes Sicherungselement, insbesondere eine Schraube. Das Sicherungselement ist insbesondere drehfest mit dem ersten Abschnitt verbunden. Ein Modul, insbesondere eine Rolle oder ein Rad, das auf den ersten Abschnitt geschoben wird und dort drehbar gelagert ist, wird somit zwischen dem Sicherungselement und der Erweiterung des Koppelteils gehalten. Das Modul wird auf diese Weise sicher befestigt. Durch die lösbare Anordnung des Sicherungselements können die Module schnell gegeneinander ausgetauscht werden. Bei dem erfindungsgemäßen System handelt es sich insbesondere um ein Schnellwechselsystem für verschiedene Rollentypen.

Als Sicherungselemente sind jegliche Schraub-, Rast-, Dreh- und/oder Klickelemente denkbar, welche eine lösbare Kopplung am Koppelteil ermöglichen.

Nach einer weiteren Ausführungsform ist die Befestigungseinrichtung mittels eines Bajonettverschlusses an der Walze oder einer Endkappe der Walze befestigbar. Dies ermöglicht eine besonders einfache und schnelle Montage bzw. Demontage. Der Bajonettverschluss ist insbesondere entgegen der Rotationsrichtung der Walze oder der Endkappe verriegelbar. Der Verschluss löst sich auf diese Weise nicht ungewollt während des Reinigungsprozesses.

Die Erfindung wird im Folgenden beispielhaft unter Bezugnahme auf die Zeichnungen beschrieben. Es zeigen:
- Fig. 1: eine Seitenansicht einer ersten Ausführungsform eines erfindungsgemäßen Reinigungssystems mit einer Führungsrolle,
- Fig. 2: eine Draufsicht des Reinigungssystems gemäß Fig. 1,
- Fig. 3: eine Detailansicht der Führungsrolle gemäß Fig. 1 in einer Vorderansicht,
- Fig. 4: eine Detailansicht der Führungsrolle samt Befestigungseinrichtung gemäß Fig. 1,
- Fig. 5: eine Schnittansicht der Führungsrolle samt Befestigungseinrichtung gemäß Fig. 4,
- Fig. 6: eine Schnittansicht des Führungsmoduls samt Befestigungseinrichtung gemäß Fig. 5 mit einer Endkappe,
- Fig. 7: eine Seitenansicht einer zweiten Ausführungsform eines erfindungsgemäßen Reinigungssystems mit einer Führungsrolle,
- Fig. 8: eine Seitenansicht einer dritten Ausführungsform eines erfindungsgemäßen Reinigungssystems mit einer Haft-rolle,
- Fig. 9: eine Draufsicht des Reinigungssystems gemäß Fig. 8, und
- Fig. 10: eine Schnittansicht der Haftrolle samt Befestigungsein-richtung und Endkappe gemäß Fig. 9.

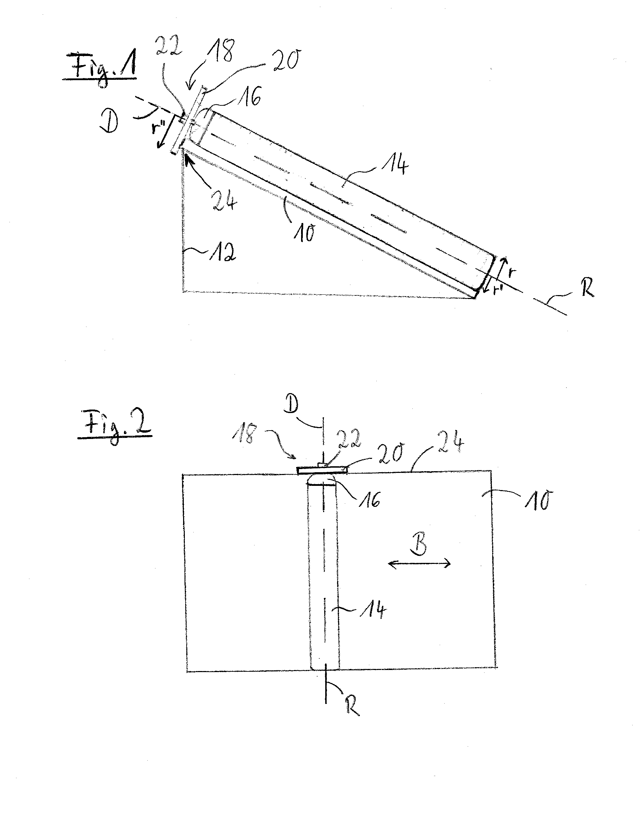

In Fig. 1 ist ein erfindungsgemäßes Reinigungssystem an einem Solarmodul 10 als Teil einer Solar- oder Photovoltaikanlage angeordnet, welches den zu reinigenden Gegenstand bildet und schräg an einem Gestell 12 montiert ist. Das Reinigungssystem umfasst eine Bürstenwalze 14, welche drehbar um eine Rotationsachse R gelagert ist. Stirnseitig an der Walze 12 ist eine Endkappe 16 angeordnet. Sowohl die Walze 14 als auch die Endkappe 16 sind mit nicht im Einzelnen dargestellten Borsten besetzt. Die Borsten haben z.B. einen Durchmesser von rund 0,2 bis 0,4 mm.

Auf der dem Solarmodul 10 zugewandten Seite werden die Borsten aufgrund des Eigengewichts des Walze 14 sowie der Endkappe 16 verformt. Auf diese Weise wird der tatsächliche Walzenradius r auf einen wirksamen Walzenradius r' reduziert. Die Verformung, d.h. die Reduzierung des Radius, kann dabei rund 2 mm bis 8 mm betragen.

Die Endkappe 16 ist mit der Walze 14 verschraubt. An der der Walze 14 abgewandten Seite der Endkappe 16 ist eine Befestigungseinrichtung 18 lösbar gekoppelt. Die Befestigungseinrichtung 18 lagert eine Führungsrolle 20, welche um eine Drehachse D rotieren kann. Die Führungsrolle 20, welche auch als Anlaufscheibe bezeichnet wird, wird von einer als Sicherungselement dienenden Schraube 22 gesichert und ist dadurch lösbar mit der Endkappe 16 und somit der Walze 14 verbunden. Die radiale Abmessung, d.h. der Radius r", der Führungsrolle 20 ist größer als der tatsächliche Walzenradius r und folglich größer als der vorstehend erläuterte wirksame Walzenradius r'. Die Führungsrolle 20 kann somit an einem Randbereich 24 des Solarmoduls 10 eingehängt werden. Auf diese Weise kann das Reinigungssystem sicher längs des Solarmoduls 10 geführt werden.

Eine Draufsicht des Reinigungssystems gemäß Fig. 1 ist in Fig. 2 dargestellt. Die Führungsrolle 20 steht über die Kante 24 des Solarmoduls 10 hinaus vor. Das Reinigungssystem kann entlang einer Bewegungsrichtung B bewegt werden. Dazu kann beispielsweise eine nicht dargestellte Haltevorrichtung, insbesondere eine Haltestange, vorgesehen sein, welche beispielsweise stirnseitig an dem der Befestigungseinrichtung 18 abgewandten Endbereich der Bürstenwalze 14 angeordnet sein kann. Alternativ kann die Haltstange auch beispielsweise axial mittig an der Walze 14 angreifen.

Über die Haltevorrichtung kann die Walze 14 z.B. mit Reinigungsfluid, insbesondere Wasser, versorgt werden. Alternativ ist auch eine externe Zuleitung für das Fluid denkbar. Über Öffnungen in der Walze 14 kann das Fluid auf das Solarmodul 10 gelangen.

Das Fluid kann ausschließlich als Reinigungsflüssigkeit dienen oder aber zusätzlich in einen Fluidantrieb geleitet werden, mit dem die Führungsrolle 20 und/oder die Walze 14 in Rotation versetzt werden kann. Das Fluid kann beispielsweise über einen Schlauch oder einen Hochdruckreiniger zugeführt werden.

Durch die Führungsrolle 20 kann die Walze 14 auch bei glatten oder nassen Oberflächen sicher entlang der Kante 24 in Bewegungsrichtung B geführt werden.

Um die Gefahr eines Verkantens zu verhindern und um das Reinigungssystem insgesamt zu stabilisieren, können auch mehrere, insbesondere zwei, parallel zueinander orientierte, mit Abstand voneinander angeordnete Walzen 14 vorgesehen sein, welche z.B. mittels einer gemeinsamen Haltestange über das Solarmodul 10 geführt werden. Ein so nach Art eines zweiachsigen Wagens ausgebildetes Reinigungssystem ist dadurch insgesamt stabiler, da es an mehreren Stellen mit dem Randbereich des Solarmoduls 10 in Kontakt steht. Sämtliche Walzen 14 können dabei jeweils als Reinigungswalze ausgebildet sein. Es ist jedoch auch möglich, dass zumindest eine Walze 14 mit einem reibungserhöhenden Material versehen oder gänzlich als Gummiwalze ausgebildet ist, um die Haftung des Reinigungssystems insgesamt zu erhöhen. Eine derartige Walze 14 kann auch als reiner Antrieb für das Reinigungssystem ausgebildet sein,

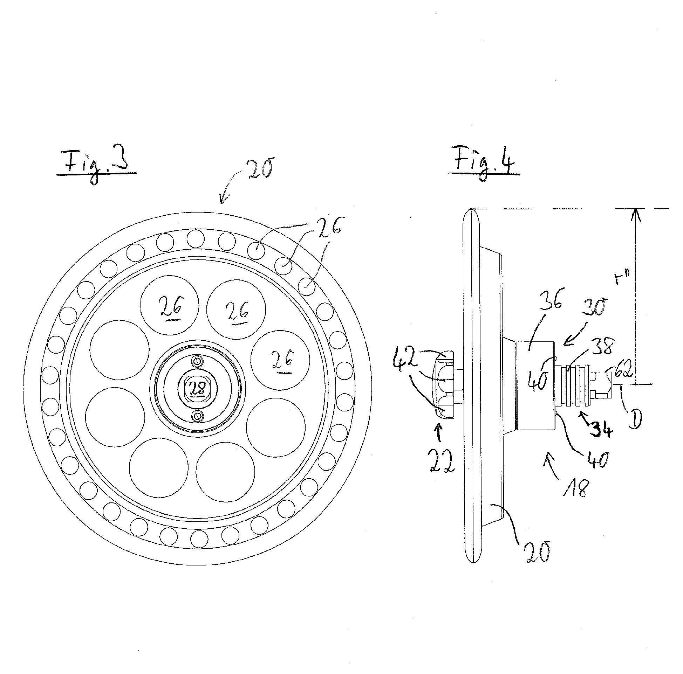

In Fig. 3 ist die Führungsrolle 20 vergrößert dargestellt. Die Führungsrolle 20 ist dabei aus einem Kunststoffmaterial gefertigt und weist mehrere Aussparungen 26 auf. Durch die Aussparungen 26 wird einerseits Material eingespart, während andererseits das Gewicht der Führungsrolle 20 reduziert wird.

Eine zentrale Öffnung 28 dient als Aufnahme für einen hier nicht dargestellten Achsstummel.

Fig. 4 zeigt die Befestigungseinrichtung 18 gemäß Fig. 1, an der die Führungsrolle 20 angebracht ist. Die Befestigungseinrichtung 18 umfasst ein Koppelteil 30, an dem die Führungsrolle 20 drehbar gelagert ist, sowie eine Schraube 22, mit der die Führungsrolle 20 am Koppelteil 30 gesichert wird. Das Koppelteil 30 umfasst einen ersten Achsstummel 32, welcher in Fig. 4 durch die Führungsrolle 20 verdeckt ist, sowie einen zweiten Achsstummel 34. Der erste Achsstummel 32 und der zweite Achsstummel 34 erstrecken sich zu zwei Seiten eines Mittelteils 36. Das Mittelteil 36 hat einen größeren Radius als die beiden Achsstummel 32, 34. Durch dieses erweiterte Mittelteil 36 sowie durch die Schraube 22 wird die Führungsrolle 20 auf dem ersten Achsstummel 32 gehalten.

Der zweite Achsstummel 34 ist mit umlaufenden Rippen 38 versehen. In die zwischen den Rippen 38 liegenden Nuten können O-Ringe eingebracht werden. Dadurch kann der zweite Achsstummel 34 mit einer gewissen Toleranz passgenau und fest mit der Walze 14 bzw. einer Endkappe 16 der Walze 14 verbunden werden.

Am freien Ende des zweiten Achsstummels 34 ist ein Bajonettabschnitt 62 zur Kopplung an eine Walze 14 bzw. eine Endkappe 16 der Walze 14 vorgesehen. Dieser Bajonettabschnitt 62 kann als Teil eines Bajonettverschlusses mit einer entsprechenden Aufnahme in der Walze 14 bzw. in der Endkappe 16 verriegelt werden. Zudem weist das Mittelteil 36 federbelastete Kugeln als Rastelemente 40 auf, welche in entsprechende Rastmulden der Walze 14 oder der Endkappe 16 einrasten können.

Zum Anbringen der Führungsrolle 20 wird die Führungsrolle 20 mit der zentralen Öffnung 28 über den ersten Achsstummel 32 geschoben. Anschließend wird die Schraube 22 unter Zwischenlage einer Scheibe 60 am ersten Achsstummel 32 fixiert. Die Schraube 22, die Führungsrolle 20 sowie das Koppelteil 30 bilden daraufhin gewissermaßen eine Einheit, welche über den Bajonettabschnitt 62 mit einer Walze 14 bzw. einer Endkappe 16 der Walze 14 gekoppelt werden kann. Zur Betätigung des Bajonettverschlusses wird die Schraube 22 verdreht. Einkerbungen 42 erhöhen dabei die Griffigkeit der Schraube 22.

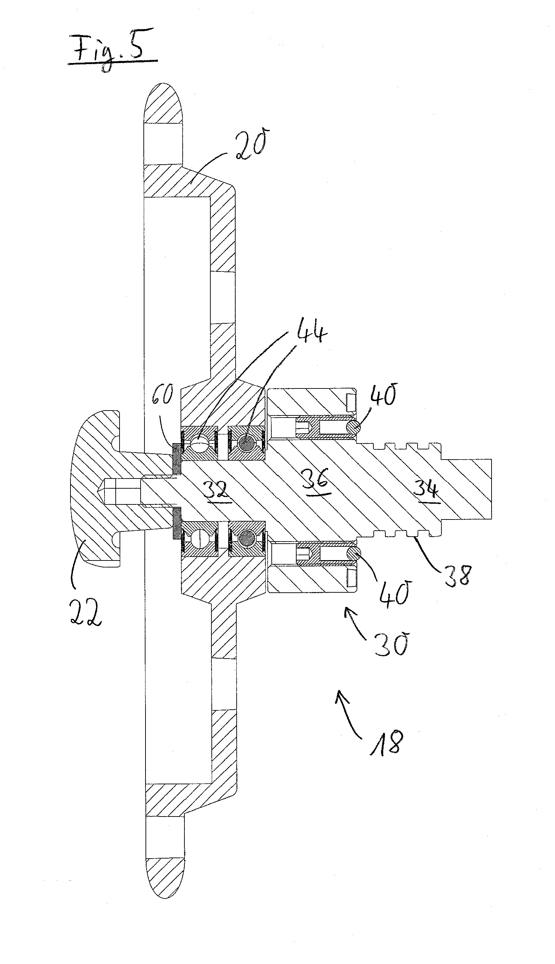

In Fig. 5 ist eine Fig. 4 entsprechende Schnittansicht gezeigt. Die Führungsrolle 20 weist zwei fest integrierte Wälzlager 44 auf, wodurch eine relative Verdrehbarkeit zum ersten Achsstummel 32 und somit letztlich zur Walze 14 hergestellt wird. Da die Schraube 22 drehfest mit dem Koppelteil 30 verbunden ist, wird eine Relativbewegung zwischen der Führungsrolle 20 und der Befestigungseinrichtung 18 gewährleistet.

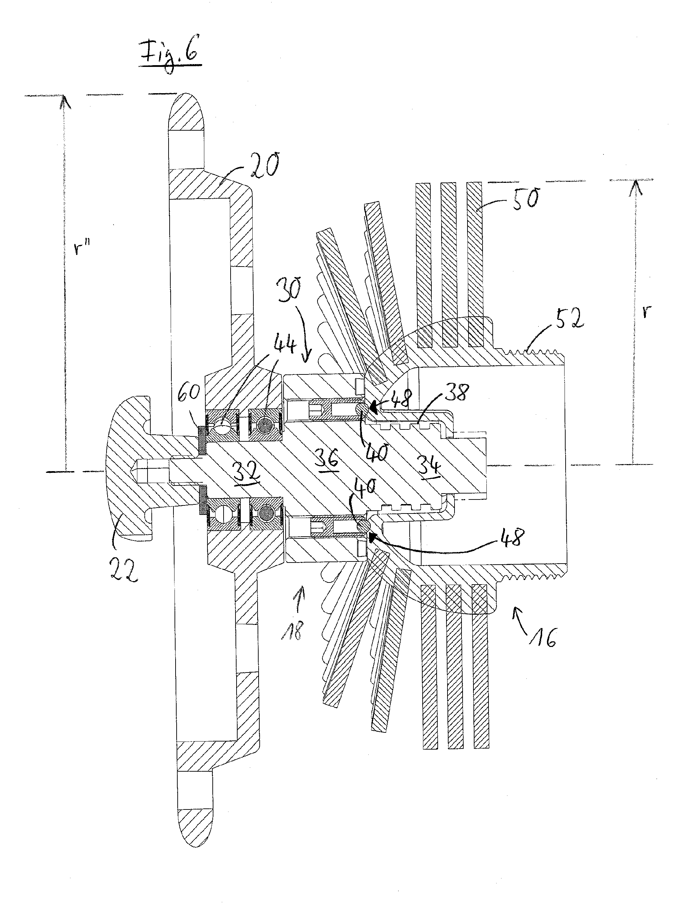

In Fig. 6 ist der zweite Achsstummel 34 mit einer Endkappe 16 der Walze 14 lösbar gekoppelt, d.h. mittels des Bajonettabschnitts 62 am Koppelteil 30 (siehe Fig. 4) und eines entsprechenden Gegenabschnitts an der Endkappe 16 nach Art eines Bajonettverschlusses verriegelt. Zur Herstellung dieser Bajonettverriegelung wird das Koppelteil 30 mithilfe der Schraube 22 entgegengesetzt zur Rotationsrichtung der Endkappe 16 verdreht, so dass sich der verriegelte Zustand während der Benutzung nicht von selbst lösen kann. Zudem rasten die Rastelemente 40 in Rastmulden 48 der Endkappe 16 ein. Die spürbare Verrastung signalisiert dem Benutzer den bestimmungsgemäßen Befestigungszustand.

Die Endkappe 16 weist Borsten 50 auf, um auch einen äußeren Bereich des Solarmoduls 10 reinigen zu können. Zudem umfasst die Endkappe 16 ein Walzengewinde 52 zum Verschrauben mit der Walze 14.

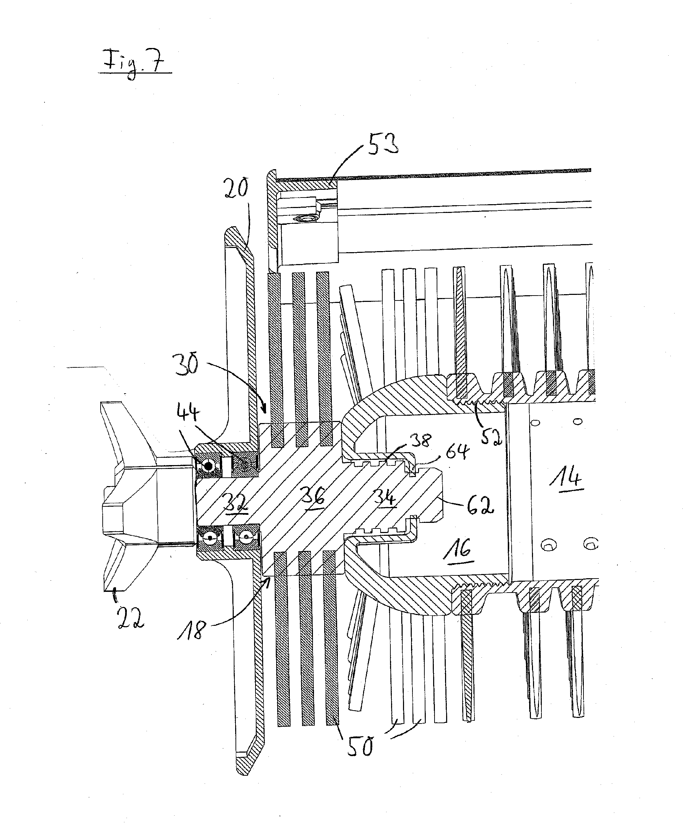

Fig. 7 zeigt eine weitere Ausführungsform des Reinigungssystems, die im Wesentlichen dem vorstehend beschriebenen Ausführungsbeispiel entspricht. Die Führungsrolle 20 läuft am Außenumfang spitz zu, um nicht in Kontakt mit beispielsweise Halterungen des Solarmoduls 10 zu gelangen.

Das Mittelteil 36 ist als Ringbürste ausgebildet, d.h. mit Borsten 50 besetzt, um auch den randseitigen Bereich eines Solarmoduls 10 effektiv reinigen zu können.

Über den Bajonettabschnitt 62 ist das Koppelteil 30 mit der Endkappe 16 verriegelt. Der Bajonettabschnitt 62 weist hierzu einen viereckigen Querschnitt auf und wird zunächst durch eine Öffnung in einer Wand 64 gesteckt, bis die Wand 64 mit einer umlaufenden Nut, die sich zwischen dem Bajonettabschnitt 62 und dem mit den Rippen 38 versehenen Bereich befindet, ausgerichtet ist. Wird der Bajonettabschnitt 62 schließlich verdreht, hintergreift er die somit ebenfalls als Bajonettabschnitt wirksame Wand 64, womit der Bajonettverschluss seine verriegelte Stellung einnimmt.

Zudem ist die Walze 14 über das Walzengewinde 52 mit der Endkappe 18 verbunden.

Eine Abdeckung 53 ist als Spritzschutz oberhalb der Walze 14 vorgesehen. Die Abdeckung 53 ist mittig an der Walze 14 montiert (nicht dargestellt), ragt somit axial beidseitig nach außen und ist an ihren Endbereichen nicht mit dem Koppelteil 30 oder der Führungsrolle 20 verbunden.

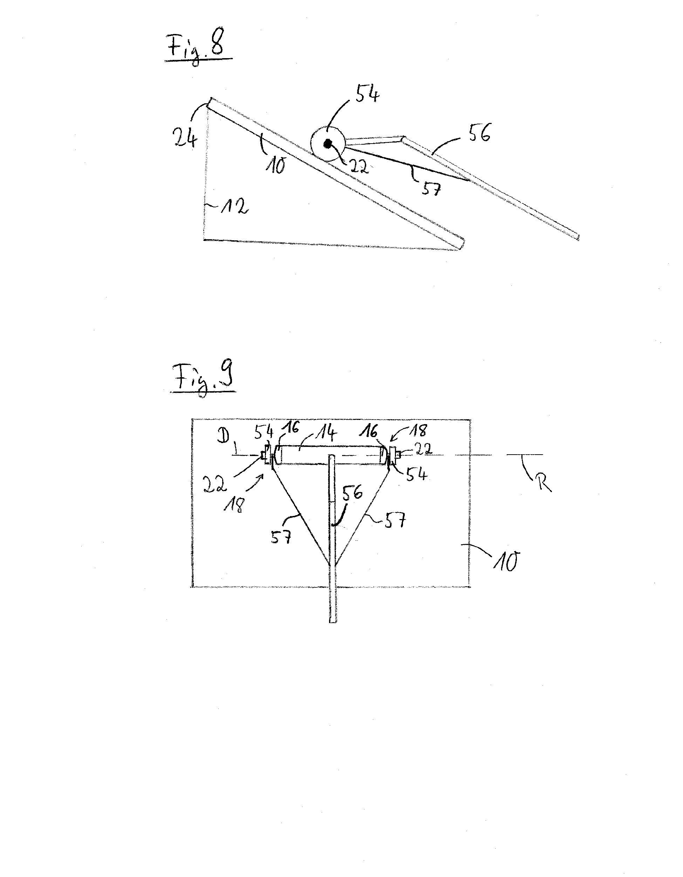

In Fig. 8 ist eine weitere Ausführungsform des Reinigungssystems mit einer Haftrolle 54 anstelle einer Führungsrolle wie bei den vorstehend erläuterten Ausführungsformen gezeigt.

Eine hier nicht dargestellte Walze ist an einem Haltestab 56 befestigt. Der Haltestab 56 kann teleskopierbar ausgebildet sein, wobei auch eine Steckverbindung zwischen einzelnen Stabelementen denkbar ist. Der Haltestab 56 kann mittels eines Schlauchs oder eines Hochdruckreinigers mit Reinigungsfluid, insbesondere Wasser, versorgt werden.

Zur Stabilisierung der Walze, insbesondere gegen ein ungewolltes Aufschaukeln, sind zwei Drahtseile 57 vorgesehen, welche jeweils zwischen den Haltestab 56 und das Koppelteil 30 gespannt sind. Dadurch wird die Walze verspannt und zusätzlich versteift. Das Koppelteil 30 ist hierbei sowohl der Träger der Haftrolle 54 als auch Träger der Seile 57.

Fig. 9 zeigt eine Draufsicht des Reinigungssystems gemäß Fig. 8. An beiden Seiten der Walze 14 sind Haftrollen 54 angeordnet, welche jeweils an ihrem äußeren Umfang ein Gummimaterial aufweisen. Dieses ist verformbar, d.h. durch das Eigengewicht des Reinigungssystems wird die Kontaktfläche mit dem Solarmodul 10 vergrößert. Dadurch wird die wirksame Reibungsfläche vergrößert und ein sicheres Halten ermöglicht. Das Gummimaterial hat zudem einen relativ hohen Reibungskoeffizienten, insbesondere einen höheren Reibungskoeffizienten als die Borsten der Walze 14. Dadurch wird eine gute Haftung des Reinigungssystems auch bei glatten und/oder nassen Flächen ermöglicht und ein Ausbrechen aus der gewünschten Reinigungsrichtung unterbunden. Außerdem sind in Fig. 9 die vorstehend erwähnten Spannseile 57 dargestellt. Durch diese Dreiecksverspannung wird auf einfache Weise eine besonders effektive Versteifung des Systems erzielt. Für diesen Aspekt einer Versteifung durch z.B. von Seilen oder Drähten gebildete Spannelemente wird auch separat und unabhängig von anderen Aspekten des hier beschriebenen Systems Schutz beansprucht.

Zumindest eine der Haftrollen 54 und/oder die Walze 14 kann über einen Antrieb, beispielsweise einen Fluidantrieb oder einen elektrischen Antrieb, verfügen. Dadurch kann die Haftrolle 54 und/oder die Walze 14 um die Achse D bzw. die Rotationsachse R in Rotation versetzt werden.

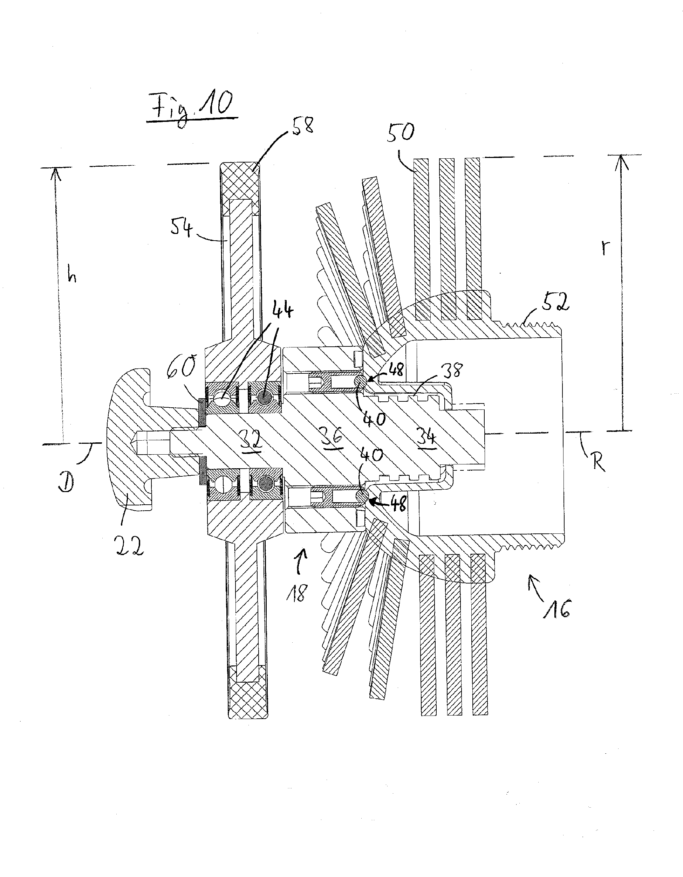

Fig. 10 zeigt eine Schnittansicht der Haftrolle 54 samt Befestigungseinrichtung 18 gemäß Fig. 9. Die Haftrolle 54 weist eine Laufspurbreite von mindestens 20 mm auf. Der Radius h der Haftrolle 54 ist etwas kleiner als der tatsächliche Radius r der Walze 14. Während des Reinigungsprozesses verformen sich die Borsten 50, wodurch sich der tatsächliche Radius r der Walze auf einer Auflagefläche auf einen wirksamen Radius r' (nicht dargestellt) reduziert, welcher etwa dem Radius h der Haftrolle 54 entspricht. Somit wird die Walze 14 durch die Haftrollen 54 auf der zu reinigenden Fläche abgestützt.

Die Haftrolle 54 weist radial außen eine Ummantelung 58 auf, welche aus einem reibungserhöhenden Material, insbesondere Moosgummi, besteht. Dieses ist vorzugsweise derart verformbar, dass es bei Kontakt mit dem Solarmodul 10 durch das Eigengewicht des Reinigungssystems die Kontaktfläche mit dem Solarmodul vergrößert.

Die Ausführungsform gemäß Fig. 10 entspricht bis auf die Haftrolle 54 der Ausführungsform gemäß Fig. 6, bei der eine Führungsrolle 20 anstelle der Haftrolle 54 eingesetzt ist. Erfindungsgemäß können die Haftrolle 54 und die Führungsrolle 20 auf einfache und schnelle Weise durch Lösen des Bajonettverschlusses mithilfe der Schraube 22 von der Walze 14 bzw. von der Endkappe 16 der Walze 14 entfernt und ausgetauscht werden.

Das erfindungsgemäße Reinigungssystem kann somit schnell, einfach und unkompliziert, insbesondere ohne den Einsatz von Werkzeugen, an die jeweilige Reinigungssituation angepasst werden.

### Bezugszeichenliste

- 10: Solarmodul, Gegenstand
- 12: Gestell
- 14: Walze
- 16: Endkappe
- 18: Befestigungseinrichtung
- 20: Führungsrolle
- 22: Schraube, Sicherungselement
- 24: Randbereich, Kante
- 26: Aussparung
- 28: Öffnung
- 30: Koppelteil
- 32: erster Achsstummel
- 34: zweiter Achsstummel
- 36: Mittelteil
- 38: umlaufende Rippe
- 40: Rastelement
- 42: Einkerbung
- 44: Wälzlager
- 48: Rastmulde
- 50: Borste
- 52: Walzengewinde
- 53: Abdeckung
- 54: Haftrolle
- 56: Haltestab
- 57: Drahtseil
- 58: Ummantelung
- 60: Scheibe
- 62: Bajonettabschnitt
- 64: Wand, Gegenabschnitt für Bajonettabschnitt
- R: Rotationsachse
- D: Drehachse
- r: tatsächlicher Walzenradius
- r': wirksamer Walzenradius
- r": Radius der Führungsrolle
- B: Bewegungsrichtung
- h: Radius der Haftrolle

## Patentansprüche

1. System zum Reinigen eines eine im Wesentlichen ebene, insbesondere geneigte Fläche aufweisenden Gegenstands (10), insbesondere einer Solar- und/oder Photovoltaikanlage, mit zumindest einer im Betrieb relativ zur Fläche rotierenden Reinigungswalze (14),
wenigstens einer Stützeinrichtung zum Abstützen der Walze (14) am zu reinigenden Gegenstand (10), und
zumindest einer Befestigungseinrichtung (18) zur stirnseitigen lösbaren Befestigung der Stützeinrichtung an der Walze (14),
wobei die Stützeinrichtung mindestens zwei gegeneinander austauschbare Module (20, 54) umfasst, die unterschiedlich ausgebildet sind, um die Walze (14) unterschiedlich am Gegenstand (10) abzustützen.

2. System nach Anspruch 1,
**dadurch gekennzeichnet, dass**
ein Führungsmodul (20) zum Führen, insbesondere Einhängen, der Walze (14) an einem Randbereich (24) des Gegenstands (10) und/oder dass ein Haftmodul (54) zum Haften auf der Fläche des Gegenstands (10) ausgebildet ist.

3. System nach Anspruch 1 oder 2,
**dadurch gekennzeichnet, dass**
zumindest eines der Module (20, 54) relativ zur Walze (14) drehbar ist, wobei bevorzugt die Drehachse (D) mit der Rotationsachse (R) der Walze (14) zusammenfällt.

4. System nach einem der vorstehenden Ansprüche,
**dadurch gekennzeichnet, dass**
zumindest eines der Module (20, 54) ein Rad, eine Rolle oder eine Kufe umfasst.

5. System nach einem der vorstehenden Ansprüche,
**dadurch gekennzeichnet, dass**
bezüglich der Rotationsachse (R) der Walze (14) die größte radiale Abmessung (r") eines Moduls (20) größer als der wirksame Radius (r') der Walze (14) ist.

6. System nach einem der vorstehenden Ansprüche,
**dadurch gekennzeichnet, dass**
bezüglich der Rotationsachse (R) der Walze (14) die größte radiale Abmessung (h) eines Moduls (54) kleiner als der Radius (r) der Walze (14) ist.

7. System nach einem der vorstehenden Ansprüche,
**dadurch gekennzeichnet, dass**
ein Haftmodul (54) einen Kontaktbereich mit einem verformbaren und/oder reibungserhöhenden Material aufweist.

8. System nach Anspruch 7,
**dadurch gekennzeichnet, dass**
der Kontaktbereich des Haftmoduls (54) eine im Wesentlichen vollumfängliche, insbesondere durchgehende, Ummantelung (58) umfasst.

9. System nach Anspruch 7,
**dadurch gekennzeichnet, dass**
der Kontaktbereich des Haftmoduls (54) Einzelelemente umfasst, die in Umfangsrichtung verteilt angeordnet sind, wobei insbesondere die Einzelelemente als Saugnäpfe ausgebildet sind.

10. System nach einem der vorstehenden Ansprüche,
**dadurch gekennzeichnet, dass**
ein Haftmodul (54) eine Kontaktfläche von mindestens 10 mm², vorzugsweise mindestens 15 mm², besonders bevorzugt mindestens 20 mm², aufweist.

11. System nach einem der vorstehenden Ansprüche,
**dadurch gekennzeichnet, dass**
mit der Walze (14) zumindest eine, insbesondere abgerundete und/oder mit Borsten (50) besetzte, Endkappe (16), insbesondere lösbar, stirnseitig verbunden ist.

12. System nach Anspruch 11,
**dadurch gekennzeichnet, dass**
die Endkappe (16) einen Bestandteil der Befestigungseinrichtung (18) bildet.

13. System nach einem der vorstehenden Ansprüche,
**dadurch gekennzeichnet, dass**
die Befestigungseinrichtung (18) ein Koppelteil (30) umfasst, bei dem ein erster Abschnitt (32), insbesondere ein erster Achsenabschnitt, zur Aufnahme des Moduls (20, 54) ausgebildet ist und ein zweiter Abschnitt (34), insbesondere ein zweiter Achsenabschnitt, vorzugsweise lösbar, an der Walze (14) oder einer Endkappe (16) der Walze (14) angeordnet ist.

14. System nach Anspruch 13,
**dadurch gekennzeichnet, dass**
die Befestigungseinrichtung (18) zur Sicherung des Moduls (20, 54) am ersten Abschnitt (32) des Koppelteils (30) ein lösbar am Koppelteil (30) angeordnetes Sicherungselement (22), insbesondere eine Schraube, umfasst.

15. System nach einem der vorstehenden Ansprüche,
**dadurch gekennzeichnet, dass**
die Befestigungseinrichtung (18) mittels eines Bajonettverschlusses an der Walze (14) oder einer Endkappe (16) der Walze (14) befestigbar ist, wobei insbesondere der Bajonettverschluss entgegen der Rotationsrichtung der Walze (14) oder der Endkappe (16) verriegelbar ist.
